# EUROPEAN PATENT APPLICATION

(11) **EP 1 965 192 A1**
(43) Date of publication of application: **03.09.2008**
(21) Application number: 07103448.2
(22) Date of filing: 02.03.2007
(51) Int. Cl.: G01N 15/06, G01N 27/66

(54) **Method and apparatus for measuring an elemental carbon content in an aerosol of soot particles**

(71) Applicant: Technische Universiteit Delft, 2628 CN Delft (NL)
(72) Inventor: Schmidt-Ott, Andreas, 2585 JW, DEN HAAG (NL); Burtscher, Heinz, CH-5210, WINDISCH (CH)
(74) Representative: Van Breda, Jacobus

(57) **Abstract**

The invention relates to a method and apparatus for measuring an elemental carbon content in an aerosol of soot particles by exposing the particles to ultraviolet radiation to induce photoelectron emission of the particles, wherein whilst the particles receive ultraviolet radiation the aerosol with the particles is heated to an elevated temperature to remove components affecting said photoemission by the particles, and that a sensor (8) is used providing a first signal which is indicative of the level of said photo emission wherein the aerosol comprising the particles is heated to a temperature higher than 180°C. In order to apply said method and apparatus to selectively measure the elemental carbon content of specific sources like passing cars, a second signal produced by a CO₂ sensor. By applying a fitting function, the first and the second signal are matched, and the remaining difference is used as a criterion to judge the quality of the measurement, allowing to discriminate between true (accepted) and false (unaccepted) measurements.

## Description

The invention relates to a method and apparatus for measuring an elemental carbon content in an aerosol of soot particles. Such a method and apparatus are known from the article 'Monitoring the soot emissions of passing cars' by A. Kurniawan and A. Schmidt-Ott, published in Environmental Science & Technology, Vol. 40, No. 6, 2006, pages 1911-1914.

According to this article, the aerosol of soot particles is exposed to ultraviolet radiation in a tube having an inlet and an outlet for the aerosol with the particles, which radiation comes from a UV-lamp placed in the outer periphery of the tube.

The tube is followed by a sensor in the form of an aerosol electrometer providing an electrical signal which is indicative of the level of photoemission that is induced by the UV-irradiation of the soot particles.

According to this publication the aerosol flowing through the device is slightly heated below 50°C to ensure particle surfaces are free from condensed water.

A method and apparatus for characterizing an aerosol of soot particles is further known from US-A-4,837,440.

According to this US patent an aerosol, i.e. a carrier gas containing particles to be characterized is used which has been brought to at least a predetermined temperature sufficient for evaporation or decomposition or preventing condensation of molecules on particles of said aerosol that quench or enhance photoelectric activity. According to this document a tube is applied having an inlet and an outlet for the aerosol to be measured, wherein an illumination zone is present at which UV-radiation of the soot particles occurs. The illumination zone further includes heating means in the form of a heater filament to modify the particle surface in a controlled way, i.e. to remove components quenching photoemission (typically at about 100°C) and/or to remove or decompose components exhibiting or promoting photoelectric activity.

Further according to this document a mode of operation is preferred in which the aerosol is heated in consecutive processing stages to a plurality of temperature levels. Each such processing stage comprises activating aerosol particles to electron emission and measuring the electrical charge of the particles. Stationary conditions can be readily achieved in each such processing stage.

It is the object of the instant invention to improve the known method and apparatus so as to provide a measuring method and apparatus that is selective for only soot and not for dust, that exhibits a quick response time which is typically less than one second, and that requires little if any maintenance.

In accordance with the invention the method and apparatus are characterized by the features of one or more of the appended claims.

In a first aspect of the invention the method for measuring an elemental carbon content of an aerosol of soot particles is characterized in that the aerosol comprising the particles is heated to a temperature higher than 180°C.

Consistent therewith the apparatus of the invention for measuring an elemental carbon content in an aerosol of soot particles is characterized in that the heating means are arranged for heating the aerosol to a temperature of at least 180°C.

The inventors have found that heating of the aerosol to a temperature of that level, or in particular to a temperature of at least 200°C leads to an evaporation of adsorbed species on the soot particles to an extent that the aerosol electrometer to be used can be calibrated with respect to the elemental carbon content independent with respect to the source of the soot particles, i.e. independent of the initial adsorbents on the particles.

Furthermore, the heating of the aerosol whilst it passes the tube at which the UV-irradiation occurs has the advantage that the material evaporated from the particles does not have to be removed since any recondensation on the particles after the induced photoemission does not influence the measurement signal. A further important advantage is that the tube wall surrounding the photoemission zone remains clean due to thermophoresis. This is of particular importance in case the UV-light source is outside of the tube. The effect of thermophoresis occurs, because there is a slight temperature gradient from the gas to the heated wall. It drives particles in gases away from the warmer region. This of course is very beneficial to the transparency of the tube for the UV-light irradiation. Also, this keeps the walls of the tube at the photoemission zone clean and prohibits that any wall deposition could come into play that would emit disturbing electrons. The necessity of regular cleaning of the tube wall is thus avoided.

According to a further aspect of the invention it is preferable that as a source for the ultraviolet radiation a UV-lamp is used wherein said UV-lamp's pressure at room temperature is reduced so as to meet the UV-lamp's optimal working pressure at the operational temperature of the UV-lamp.

Still a further aspect of the invention relates to a method and apparatus for measuring the elemental carbon content in an aerosol of soot particles wherein the first signal of the sensor measuring the elemental carbon content is combined with a second signal of a CO₂-sensor. According to the above mentioned publication by A. Kurniawan and A. Schmidt-Ott referring to the measurement on passing vehicles, the ratio between the elemental carbon content and the CO₂ content is an emission factor useful for characterization of the elemental carbon emission of the combustion source.

According to the invention, the first signal of the carbon content sensor and the second signal of the CO₂-sensor are fitted by application of a fitting function to the first signal and/or the second signal so as to provide a best match of both signals. This can effectively be realised in an apparatus wherein the first sensor and the second sensor are connected to a processor for fitting the signals from the first sensor and the second sensor in order to provide the best match between both signals from said sensors.

The level at which it is possible to arrive at a good fit between these signals can be used as a measure of the reliability of the measurement by the carbon content sensor.

To this end it is preferable that the fitting function provides a measure which is indicative for the remaining difference between both signals after application of the fitting function. The processor to which the first sensor and the second sensor are connected can be arranged to provide this measure.

Based on said measure it is then possible to discriminate between true and false measurements of the elemental carbon content in an aerosol of soot particles from a pre-selected source, such as a measurement of the elemental carbon content emitted by a passing car.

Due to the application of the fitting function by the processor it is possible to be quite resistant against the disturbing influence of the unknown dilution between what exits the tailpipe of the passing car, and the measurement level at the site where the measurements occur.

The invention will hereinafter be further elucidated with reference to the drawing of an exemplary embodiment of an apparatus according to the invention.

In the drawing:
- Fig. 1 shows an exemplary embodiment of an apparatus in which the method of the invention can be applied.
- Fig. 2 shows a schematic drawing of a further apparatus according to the invention.

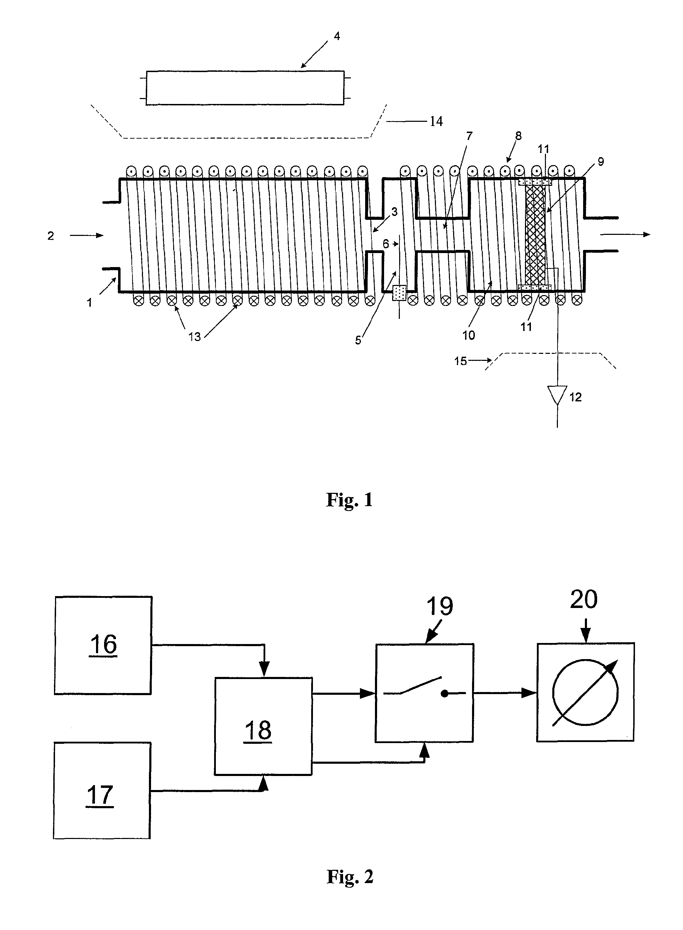

The invention shall now first be discussed with reference to Fig. 1.

The apparatus of the invention for measuring an elemental carbon content in an aerosol of soot particles comprises a tube 1 having an inlet 2 and an outlet 3 for the aerosol.

The tube 1 is transparent for UV-light from a UV-light source 4 which is placed outside of the tube 1. It is however also possible to place the UV-light source inside of the tube 1. Immediately following the outlet 3 of the tube 1 there is a so-called ion trap 5 comprising an electrode 6 carrying a moderate voltage in comparison to the walls of the tube. The voltage is high enough to cause precipitation of the gas ions that have emerged from the photoemission of the soot particles that entered the tube's 1 inlet 2 and left the tube 1 at its outlet 3 and which photoemission occurred due to the UV-radiation by the UV-light source 4. The soot particles are thus charged in tube 1 through exposure to ultra violet radiation and remain charged at the ion trap 5 and leave same through its exit 7 to enter a sensor 8 in the form of an aerosol electrometer that provides an electrical signal which is indicative of the level of photoemission that was induced by the UV-irradiation of the soot particles in the tube 1.

For this purpose the aerosol electrometer 8 provides a particle filter 9, which is mounted in a chamber 10 by means of an insulating ring 11.

The particle filter 9 is connected to a current amplifier 12 providing an electrical signal that is proportional to the charges that are deposited at the particle filter 9 per unit of time.

At least at the part where the tube 1 receives UV-irradiation from the UV-light source 4, said tube 1 is provided with a heating element 13 to secure heating of the aerosol comprising the soot particles whilst the particles receive ultraviolet radiation from the UV-light source 4. The aerosol is heated for this purpose to a temperature higher than 180°C. The inventors have found that this temperature may even be selected (much) higher. However, a temperature of higher than 500°C is not recommended, because it may lead to removal of the soot particles by oxidation.

Optionally, the apparatus of the invention may be provided with a heating shield 14 for the UV-light source 4 and a heating shield 15 for protection of the electronics that are connected to the particle filter 9. Alternative to the arrangement suggested by Fig. 1, the tube could have an annular profile and surround the lamp, positioned at its axis. The outer wall of the tube would then not have to be transparent for ultraviolet radiation. In this configuration, the heating element would preferentially be positioned at the inner wall of the tube to keep the transparent portion of the tube wall clean by thermophoresis.

Figure 1 further shows that the heating element 13 may extend also over the ion trap 5 and the aerosol electrometer 8. In particular, moderate heating of the aerosol electrometer is desirable in order to avoid adsorption of water to the insulating ring 11, thus guaranteeing good insulation and accurate current measurement.

An effective embodiment of the heating means 13 may be the application of electrical resistance heating by having an appropriate electric current run through an electric wire 13 that surrounds the tube 1, and optionally the ion trap 5 and/or the aerosol electrometer 8.

Referring now further to Fig. 2 showing a schematic drawing of a further apparatus of the invention, a sensor 16 for measuring elemental carbon content is combined with a CO₂-sensor 17 in a manner to be explained hereinafter.

The sensor 16 for elemental carbon content may be embodied in accordance with the apparatus of Fig. 1 or may be any other suitable type of elemental carbon content sensor that is available from the market.

Both the elemental carbon content sensor 16 and the CO₂-sensor 17 are connected with a processor 18 which is arranged for fitting the signals from the first sensor 16 and the second sensor 17 so as to provide a best match of these signals, and to correct for dilution.

When completing the fitting of the signals from the carbon content sensor 16 and the CO₂-sensor 17, the processor 18 provides a measure that is indicative for a remaining difference between both signals, and this measure is used to feed a discriminator 19 to which connects a readout device 20 showing that the measurement by the elemental carbon content sensor 16 is either true or false depending on the level of said measure provided by the processor 18.

As an example it may be mentioned that for the fitting of both signals of the carbon content sensor 16 and the CO₂-sensor 17 a simple multiplication by a multiplier on one of the signals may be applied. This factor may be determined with the aid of the well known root mean square method which is used to minimize the differences between the two signals. The resulting remaining difference between the signals from the elemental carbon content sensor 16 and the CO₂-sensor 17 may then serve as the measure allowing to discriminate between true and false measurements by the sensor or sensors.

## Claims

1. Method for measuring an elemental carbon content in an aerosol of soot particles by exposing the particles to ultraviolet radiation to induce photoelectron emission of the particles, wherein whilst the particles receive ultraviolet radiation the aerosol with the particles is heated to an elevated temperature to remove components affecting said photoemission by the particles, and that a sensor is used providing a first signal which is indicative of the level of said photo emission, **characterized in that** the aerosol comprising the particles is heated to a temperature higher than 180°C.

2. Method according to claim 1, **characterized in that** as a source for the ultraviolet radiation a UV-lamp is used wherein said UV-lamp's pressure at room temperature is reduced so as to meet the UV-lamp's optimal working pressure at the operational temperature of the UV-lamp.

3. Method for measuring the elemental carbon content in an aerosol of soot particles, wherein the first signal of the sensor measuring the elemental carbon content is combined with a second signal of a CO₂-sensor, **characterized in that** the first signal of the carbon content sensor and the second signal of the CO₂ are fitted by application of a fitting function to the first signal and/or the second signal so as to provide a best match of both signals.

4. Method according to claim 3, **characterized in that** the fitting function provides a measure which is indicative for the remaining difference between both signals after application of the fitting function.

5. Method according to claim 4, **characterized in that** said measure is used to discriminate between true and false measurements of the elemental carbon content in an aerosol of soot particles emitted by a pre-selected source.

6. Apparatus for measuring an elemental carbon content in an aerosol of soot particles, comprising a tube (1) having an inlet (2) and an outlet (3) for the aerosol, a UV-light source (4), and further comprising a sensor (8) that is arranged as an aerosol electrometer providing an electrical signal which is indicative of the level of photoemission induced by the UV-irradiation of said particles, wherein heating means (13) are applied for heating the aerosol at least partly whilst it passes the tube, **characterized in that** the heating means are arranged for heating the aerosol to a temperature of at least 180°C.

7. Apparatus according to claim 6, **characterized in that** the tube (1) is transparent for UV-light and the UV-light source (4) is placed outside the tube.

8. Apparatus according to claim 6 or 7, **characterized in that** the UV-light source (4) is a UV-lamp which is set at a reduced UV-lamp pressure at room temperature so as to cause that at its operational temperature the UV-lamp operates at an optimal pressure.

9. Apparatus according to any one of claims 6-8, **characterized in that** the heating means are arranged to heat the aerosol electrometer.

10. Apparatus for measuring the elemental carbon content in an aerosol of soot particles, comprising a first sensor for measuring the elemental carbon content and a second sensor for measuring CO₂, **characterized in that** the first sensor and the second sensor are connected to a processor for fitting the signals from the first sensor and the second sensor so as to provide a best match of both signals.

11. Apparatus according to claim 10, **characterized in that** the processor is arranged to provide a measure that is indicative for a remaining difference between both signals after the processor's fitting of the signals is completed.

12. Apparatus according to claim 11, **characterized in that** the processor connects to a discriminator for selectively indicating a measurement of the elemental carbon content as being true or false depending on said measure.

## Amended claims

### Amended claims in accordance with Rule 137(2) EPC.

**1.** Method for measuring the elemental carbon content in an aerosol of soot particles, wherein the first signal of the sensor measuring the elemental carbon content is combined with a second signal of a CO₂-sensor, **characterized in that** the first signal of the carbon content sensor and the second signal of the CO₂ are fitted by application of a fitting function to the first signal and/or the second signal so as to provide a best match of both signals.

**2.** Method according to claim 1, **characterized in that** the fitting function provides a measure which is indicative for the remaining difference between both signals after application of the fitting function.

**3.** Method according to claim 2, **characterized in that** said measure is used to discriminate between true and false measurements of the elemental carbon content in an aerosol of soot particles emitted by a pre-selected source.

**4.** Apparatus for measuring the elemental carbon content in an aerosol of soot particles, comprising a first sensor for measuring the elemental carbon content and a second sensor for measuring CO₂, **characterized in that** the first sensor and the second sensor are connected to a processor for fitting the signals from the first sensor and the second sensor so as to provide a best match of both signals.

**5.** Apparatus according to claim 4, **characterized in that** the processor is arranged to provide a measure that is indicative for a remaining difference between both signals after the processor's fitting of the signals is completed.

**6.** Apparatus according to claim 5, **characterized in that** the processor connects to a discriminator for selectively indicating a measurement of the elemental carbon content as being true or false depending on said measure.
